# EUROPÄISCHE PATENTANMELDUNG

(11) **EP 2 514 646 A2**
(43) Veröffentlichungstag der Anmeldung: **24.10.2012**
(21) Anmeldenummer: 12163283.0
(22) Anmeldetag: 05.04.2012
(51) Int. Cl.: B60T 7/20, F16D 51/48, F16D 65/56

(54) **Radbremse für ein trommelgebremstes Fahrzeug sowie Spreizschloss für eine Trommelbremse**

(30) Priorität: 18.04.2011 DE 102011002121
(71) Anmelder: BPW FAHRZEUGTECHNIK GmbH & CO. KG, 33104 Paderborn (DE)
(72) Erfinder: Müller, Matthias, 51105 Köln (DE); Heidrich, Philipp, 32657 Lemgo (DE); Kamm, Michael, 52223 Stolberg (DE); Klein, Karsten, 51580 Reichshof (DE); Morfeld, Alfons, 33129 Delbrück (DE)
(74) Vertreter: Christophersen & Partner

(57) **Zusammenfassung**

Vorgeschlagen wird eine Radbremse mit einer Bremstrommel (3), zwei Bremsbacken (2A, 2B), einem durch ein Bremsorgan (1) betätigten, die Bremsbacken (2A, 2B) gegen die Bremstrommel (3) beaufschlagenden Spreizschloss (5), einer Rückfahrautomatik (10) zum zumindest teilweisen Aufheben der Bremsbackenabstützung bei Rückwärtsfahrt des Fahrzeuges, und einer an dem Spreizschloss (5) angeordneten Nachstelleinrichtung für das Lüftspiel (L) zwischen den Bremsbacken (2A, 2B) und der Bremstrommel (3), wobei im Übertragungsweg der Nachstelleinrichtung mindestens angeordnet sind:
- ein mit der Bewegung des Bremsorgans (1) gekoppeltes erstes Antriebsteil (20) mit mindestens einem daran angeordneten ersten Formschlusselement (22),
- ein drehbar am Spreizschloss (5) gelagertes zweites Antriebsteil (30), das zur Kopplung mit dem ersten Antriebsteil (20) mit gleichmäßig über den Umfang verteilten zweiten Formschlusselementen (31) versehen ist,
- ein durch Drehen des zweiten Antriebsteils (30) in Richtung zu einer der Bremsbacken (2A bzw. 2B) schraubbares und an dieser unmittelbar oder mittelbar abgestütztes Nachstellelement (34).

Bei dieser Radbremse ist das erste Antriebsteil (20) über einen ersten Bewegungsabschnitt sowie einen zweiten, versatzlos in Verlängerung hierzu angeordneten Bewegungsabschnitt beweglich. Die Formschlusselemente (22, 31) sind auf dem ersten Bewegungsabschnitt in Eingriff, und auf dem verlängerten Bewegungsabschnitt außer Eingriff. Zwischen dem zweiten Antriebsteil (30) und dem Nachstellelement (34) ist eine Überlastkupplung (45) angeordnet, welche den Übertragungsweg zum Nachstellelement (34) in gekuppeltem Zustand schließt und in entkuppeltem Zustand unterbricht.

Ferner vorgeschlagen wird ein Verfahren zum Nachstellen des Lüftspiels bei einer Radbremse eines trommelgebremsten Fahrzeuges, sowie ein geeignetes Spreizschloss.

## Beschreibung

Die Erfindung betrifft eine Radbremse nach dem Oberbegriff des Patentanspruchs 1, ein Verfahren zum Nachstellen des Lüftspiels bei einer Radbremse nach dem Oberbegriff des Patentanspruchs 9, sowie ein Spreizschloss für eine Trommelbremse nach dem Oberbegriff des Patentanspruchs 13.

Bei Radbremsen, wie sie z. B. aus der EP 0 482 430 B1 und der WO 2007/093399 A1 bekannt sind, sind die beiden von innen gegen die Bremstrommel arbeitenden Bremsbacken an ihren einen Enden über ein Spreizschloss miteinander verbunden. In das Spreizschloss integriert ist eine Nachstelleinrichtung aus einem Nachstellzahnrad mit Gewindestößel und einem Nachstellorgan in Form eines außen an der Spreizeinrichtung gelagerten Nachstellhebels. Mit Betätigung der Radbremse wird zugleich dieser Nachstellhebel verschwenkt, wobei er in das Nachstellzahnrad eingreift und im Falle eines aufgetretenen Bremsverschleißes den Nachstellmechanismus ratschenartig weiterschaltet mit der Folge, dass fortan die wirksame Spreizbreite des Spreizschlosses vergrößert ist. Die bekannten Radbremsen sind, da sie vor allem für Anhängerfahrzeuge bestimmt sind, mit einer Rückfahrautomatik ausgestattet, die bei einer Rückwärtsfahrt des Anhängers die Bremsbackenabstützung teilweise aufhebt, und so ein zumindest teilweises Ausweichen einer oder beider Bremsbacken nach innen ermöglicht. Auch wenn das Ausweichen nur an einem Ende der Bremsbacken erfolgt, führt dies trotzdem zu einem deutlich vergrößerten Bremsbetätigungshub, was bei einer Bremsung und ohne geeignete Ausgleichsmaßnahmen zu einer unerwünschten Nachstellung führen würde. Um dies zu vermeiden, ist bei der EP 0 482 430 B1 die Nachstelleinrichtung mit der ausweichfähig angeordneten Bremsbacke verbunden, wobei diese Verbindung bei Rückwärtsfahrt und damit bei einem Aufheben der Bremsbackenabstützung gelöst werden kann. Bei der WO 2007/093399 A1 ist die Nachstelleinrichtung mit einer Löseeinrichtung in Gestalt eines weiteren, außen an dem Spreizgehäuse gelagerten Hebels versehen. Dieser löst im Falle eines stark vergrößerten Bremsbetätigungshubs den Eingriff des Nachstellhebels in das Nachstellzahnrad.

Der Erfindung liegt die A u f g a b e zugrunde, eine für den Einsatz mit einer Rückfahrautomatik geeignete, verbesserte Radbremse mit Nachstelleinrichtung am Spreizschloss zu schaffen.

Zur L ö s u n g dieser Aufgabe wird eine Radbremse mit den Merkmalen des Patentanspruchs 1, ein Verfahren zum Nachstellen des Lüftspiels bei einer Radbremse mit den Merkmalen des Patentanspruchs 9, und ein Spreizschloss für eine Trommelbremse mit den Merkmalen des Patentanspruchs 13 vorgeschlagen.

Bestandteile der Radbremse sind eine Bremstrommel, zwei Bremsbacken, ein durch ein Bremsorgan betätigtes, die Bremsbacken gegen die Bremstrommel beaufschlagendes Spreizschloss, eine Rückfahrautomatik zum zumindest teilweisen Aufheben der Bremsbackenabstützung bei Rückwärtsfahrt des Fahrzeuges, und eine an dem Spreizschloss angeordnete Nachstelleinrichtung für das Lüftspiel zwischen den Bremsbacken und der Bremstrommel. Im Übertragungsweg der Nachstelleinrichtung sind mindestens angeordnet ein mit der Bewegung des Bremsorgan gekoppeltes erstes Antriebsteil mit mindestens einem daran angeordneten ersten Formschlusselement, ein drehbar am Spreizschloss gelagertes zweites Antriebsteil, das zur Kopplung mit dem ersten Antriebsteil mit gleichmäßig über den Umfang verteilten zweiten Formschlusselementen versehen ist, und ein durch Drehen des zweiten Antriebsteils in Richtung zu einer der Bremsbacken schraubbares und an dieser unmittelbar oder mittelbar abgestütztes Nachstellelement. Diese Radbremse ist dadurch gekennzeichnet, dass das erste Antriebsteil über einen ersten Bewegungsabschnitt sowie einen zweiten, versatzlos in Verlängerung hierzu angeordneten Bewegungsabschnitt beweglich ist, dass die Formschlusselementen auf dem ersten Bewegungsabschnitt in Eingriff, und auf dem verlängerten Bewegungsabschnitt außer Eingriff sind, und dass zwischen dem zweiten Antriebsteil und dem Nachstellelement eine Überlastkupplung angeordnet ist, welche den Übertragungsweg zum Nachstellelement in gekuppeltem Zustand schließt und in entkuppeltem Zustand unterbricht.

Hinsichtlich des Verfahrens zum Nachstellen des Lüftspiels wird ein eine Zuspannbewegung ausführendes und dabei zwei Bremsbacken auseinanderdrückendes Spreizschloss, ferner eine ein vorgegebenes Lüftspiel zwischen den Bremsbacken und der Bremstrommel automatisch einstellende Nachstelleinrichtung, und ferner eine Rückfahrautomatik vorgeschlagen, durch welche die Bremsbackenabstützung bei Rückwärtsfahrt zumindest teilweise aufgehoben wird. Das Verfahren ist dadurch gekennzeichnet, dass eine die durch das Spreizschloss hervorgerufene Zuspannbewegung abgreifende erste Antriebseinheit nach Überwinden des vorgegebenen Lüftspiels in eine zweite Antriebseinheit eingreift, wobei die zweite Antriebseinheit zwei miteinander über einen definierten Reibschluss bewegungsgekoppelte Kupplungsteile beinhaltet welche die Bewegung solange an einen Nachstellmechanismus weitergeben, bis eine auf das Spreizschloss wirkende, vorgegebene Abstützkraft der Bremsbacken überschritten wird. Hierbei sind Bestandteile der ersten Antriebseinheit vorzugsweise ein Übersetzungshebel, ein Nachstellhebel und ein Formschlusselement zum Eingriff in die zweite Antriebseinheit. Bestandteile der zweiten Antriebseinheit sind vorzugsweise ein Zahnrad, eine Buchse, eine Gewindebuchse und ein Nachstellelement.

Hinsichtlich des erfindungsgemäßen Spreizschlosses für eine Trommelbremse wird vorgeschlagen: Eine Rückfahrautomatik, ein Spreizschlossgehäuse, ein auf einer Welle in Bezug auf das Spreizschlossgehäuse drehbar gelagerter Spreizhebel, und ein Nachstellelement, welches mit Antriebsteilen in Wirkverbindung steht. Um ein Vordringen von Schmutz zu den beweglichen Antriebsteilen zu verhindern, sind diese in an dem Spreizschlossgehäuse ausgebildeten Bewegungsräumen, welche gegenüber der Umgebung verschlossen sind, aufgenommen.

Der Vorteil dieser Lösungen besteht in einer hohen Betriebssicherheit der Nachstellung des Bremslüftspiels sowie in einem geringen Platzbedarf im Gehäuse der Bremse.

Das Spreizschloss einschließlich der Nachstelleinrichtung hat im Wesentlichen die gleiche Baugröße und die gleichen Anschlussmaße, wie ein konventionelles Spreizschloss einer Trommelbremse. Dies ermöglicht eine Standardisierung der Radbremse, da eine zusätzliche Adaption anderer Radbremsteile, etwa der Bremsbacken, der Bremsbackenabstützungen oder der Bremsbackenhaltefedern, nicht erforderlich ist.

Vorteilhafte Ausgestaltungen der Erfindung sind in den jeweiligen Unteransprüchen angegeben.

Weitere Einzelheiten und Vorteile ergeben sich auch aus der nachfolgenden Beschreibung eines Ausführungsbeispiels, wobei auf die Zeichnungen Bezug genommen wird. Darin zeigen:
- Fig. 1: in stark schematischer Darstellung den Grundaufbau der Radbremse in der Bauart als Trommelbremse;
- Fig. 2: eine perspektivische Darstellung des Spreizschlosses der Trommelbremse;
- Fig. 3: einen Längsschnitt durch das Spreizschloss;
- Fig. 4: einen Längsschnitt durch den Nachstellmechanismus innerhalb des Spreizschlosses einschließlich des Endes der angrenzenden Bremsbacke;
- Fign. 5a, b: die in Fig. 4 bezeichnete Einzelheit V in zwei verschiedenen Einstellungen;
- Fign. 6a - e: eine Ansicht entsprechend der in Fig. 4 bezeichneten Ansicht VI in fünf verschiedenen Funktionszuständen;
- Fig. 7: in perspektivischer Darstellung eine zweite Ausführungsform des Gehäuses des Spreizschlosses sowie Elemente der Nachstellung;
- Fign. 8a - e: in einer Schnittdarstellung des Gehäuses des Spreizschlosses die fünf verschiedenen Funktionszustände, wie sie für die erste Ausführungsform in den Fign. 6a - e wiedergegeben sind.

Die im Folgenden näher beschriebene, automatisch nachstellende Radbremse kommt insbesondere bei Anhängerfahrzeugen zum Einsatz. Ein solches Anhängerfahrzeug besteht aus einem Fahrgestell mit ein oder mehreren Achsen und mit einer starren oder beweglichen Zugdeichsel, an der die Anhängerkupplung, eine Handbremseinrichtung sowie, bei auflaufgebremsten Anhängern, Teile einer Auflaufbremseinrichtung angeordnet sind. Beim Auflaufen des Anhängerfahrzeuges wird die Bremskraft mittels eines Bremsorgans 1, bei dem es sich z.B. um ein Bremsgestänge oder einen Bremsseilzug handeln kann, auf die links und rechts des Fahrzeuges angeordneten Radbremsen übertragen.

Die Radbremse ist als Trommelbremse ausgebildet. Sie besteht aus einem Bremsschild 8 und zwei halbschalenförmigen Bremsbacken 2A, 2B die innerhalb einer mit dem Fahrzeugrad drehenden Bremstrommel 3 angeordnet sind. Über die am Bremsgestänge oder Bremsseilzug wirkende Bremskraft wird ein zwischen den einen Enden der Bremsbacken schwimmend angeordnetes Spreizschloss 5 gespreizt, indem die wirksame Länge zwischen seiner einen Abstützung 16 gegen das eine Ende der linken Bremsbacke 2A einerseits, und seiner anderen Abstützung 17 gegen das eine Ende der rechten Bremsbacke 2B andererseits vergrößert wird. Der Spreizkraft entgegen wirkt die Zugkraft einer oder mehrerer Federn 6, welche bestrebt sind, die Bremsbacken 2A, 2B gegeneinander zu ziehen.

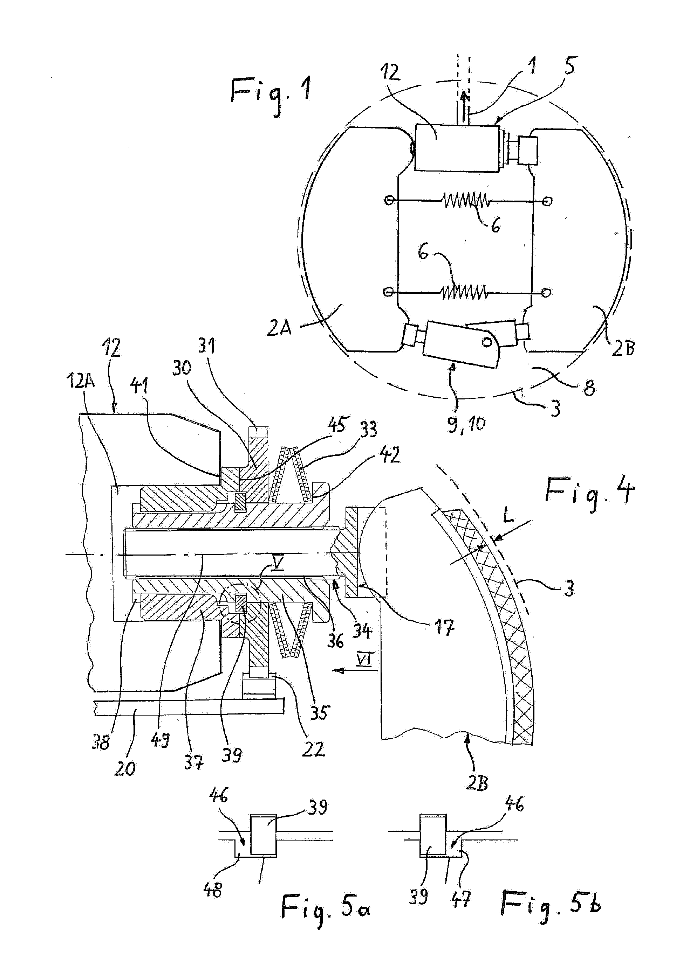

Im Bereich des anderen, in Fig. 1 unten wiedergegebenen Endes der Bremsbacken 2A, 2B befindet sich eine mit dem Bremsschild 8 verbundene Abstützung 9. Die Abstützung 9 verbindet im normalen Bremsbetrieb die anderen, hier unteren Bremsbackenenden miteinander. In die Abstützung 9 integriert ist eine Rückfahrautomatik 10, welche bei Rückwärtsfahrt des Fahrzeugrads diese Abstützung der Bremsbacken 2A, 2B zum Teil oder vollständig aufhebt, so dass zumindest eine der beiden Bremsbacken außer Eingriff mit der Bremstrommel 3 gebracht wird. Die Rückfahrautomatik 10 in der unteren Abstützung 9 kann z. B. aus einem Stützglied und mindestens einem bei Rückwärtsfahrt ausweichenden Nocken bestehen. Bei Rückwärtsfahrt kollabiert die untere Backenabstützung, wodurch sich die betreffenden beiden Bremsbackenenden annähern, und die Bremswirkung insgesamt aufgehoben ist. In die Abstützung 9 kann ferner eine manuelle Nachstellung integriert sein, mit der sich von Hand die wirksame Stützweite zwischen den beiden unteren Backenenden justieren lässt.

Das Spreizschloss 5 hingegen ist mit einer im Folgenden näher beschriebenen, automatisch arbeitenden Nachstelleinrichtung versehen, mit der im Fahrbetrieb der Verschleiß der Bremsbeläge automatisch kompensiert wird. Denn mit zunehmendem Verschleiß der Beläge wird der zum Anlegen der Bremsbacken 2A, 2B an die Bremstrommel 3 erforderliche Zuspann- oder Spreizweg größer. Die automatische Nachstelleinrichtung kompensiert dieses sogenannte Lüftspiel L (Fig. 4).

Bei Rückwärtsfahrt und aktivierter Rückfahrautomatik 10 entsteht ein deutlich vergrößerter Hub. Denn mit dem Kollabieren im Bereich der Abstützung 9 kommt es zu einer gegenseitigen Annäherung der Bremsbacken 2A, 2B, die ohne besondere Maßnahmen an der Nachstelleinrichtung zur Folge hätte, dass über die Maßen und irreversibel nachgestellt würde. Die Wegvergrößerung bei der Zuspannung würde von der Nachstelleinrichtung als Verschleiß an den Bremsbacken fehlinterpretiert, und zu einem irreversiblen Nachstellen am Spreizschloss 5 führen. Daneben sind aber auch andere Ursachen für anormal große Bremsbetätigungshübe möglich, z. B. thermisch bedingte vorübergehende oder dauerhaft zurückbleibende Ausdehnungen einzelner Bauteile, etc.. Die im Folgenden näher beschriebene Nachstelleinrichtung ist daher so ausgestaltet, dass mit mechanischen Mitteln automatisch zwischen der notwendigen Nachstellung, also im Fall eines durch Bremsbelagverschleiß bedingten erhöhten Lüftspiels, und einem scheinbaren übermäßigen Lüftspiel bei wirksamer Rückfahrautomatik differenziert wird.

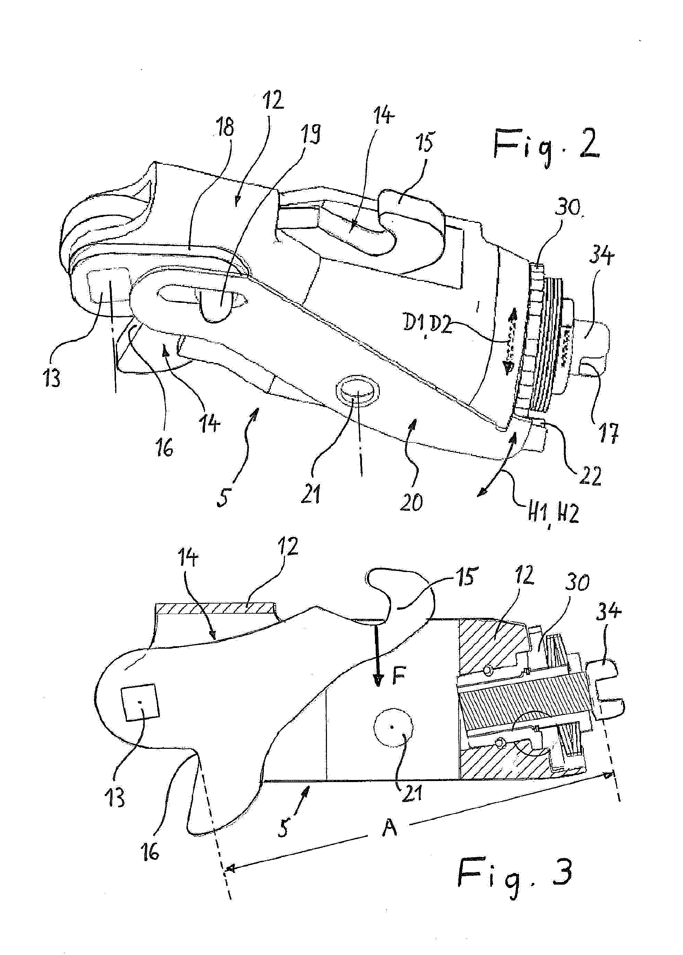

Gemäß den Fign. 2 und 3 besteht das Spreizschloss 5 aus einem Gehäuse 12 und einem darin auf einer weit außen angeordneten Welle 13 gelagerten Spreizhebel 14. Bestandteil des Spreizhebels 14 ist ein etwa in der Mitte des Gehäuses 12 angeordneter Haken 15, an dem das Bremsorgan 1, also hier das Bremsgestänge oder der Bremsseilzug, angreift. Bestandteil des Spreizhebels 14 ist ferner die in Längsrichtung des Gehäuses 12 weisende Abstützung 16, gegen die sich das Ende der einen, hier der linken Bremsbacke 2A unmittelbar oder mittelbar abstützt. Im Bereich des anderen Endes des Gehäuses 12 ist die andere Abstützung 17 angeordnet, über die sich das Spreizschloss 5 unmittelbar oder mittelbar gegen das Ende der anderen Bremsbacke 2B abstützt.

Infolge der am Bremsorgan 1 wirkenden Bremskraft F schwenkt der Spreizhebel 14 um die Welle 13, wodurch sich der in Fig. 3 wiedergegebene Abstand A zwischen den beiden Abstützungen 16, 17 mit der Folge einer Zuspannbewegung vergrößert, bis sich die Bremsbacken 2A, 2B unter Aufheben des Lüftspiels von innen her gegen die Bremstrommel 3 anlegen.

Um dieselbe Welle 13 wie der Spreizhebel 14 dreht ein Hebel 18, der als Übersetzung arbeitet. Er ist drehfest zu dem Spreizhebel 14 und führt dieselbe Schwenkbewegung aus. Der Übersetzungshebel 18 kann sich innerhalb des Spreizschlossgehäuses befinden, jedoch erstreckt er sich beim Ausführungsbeispiel außerhalb und längs dieses Gehäuses 12. Über ein Koppelelement 19 an dem der Welle 13 abgewandten Ende des Übersetzungshebels 18 ist der Übersetzungshebel 18 zwecks Herbeiführung der Übersetzung mit dem einen Ende eines zweiarmigen Hebels gekoppelt, der als Nachsteller 20 ein erstes Antriebsteil der Nachstelleinrichtung bildet. Der Nachsteller 20 ist hier außerhalb des Gehäuses 12 auf einer ungefähr in Gehäusemitte gehäusefest angeordneten Achse 21 schwenkbar gelagert. Der Nachsteller kann aber auch gemeinsam mit dem Übersetzungshebel geschützt in dem Gehäuse 12 angeordnet sein. Übersetzungshebel 18 und Nachstellhebel 20 sind so angeordnet und gelagert, dass sich ihre durch das Kopplungselement 19 erreichte Bewegungskopplung zwischen der Welle 13 und der Achse 21 befindet.

An seinem anderen, dem Koppelelement 19 abgewandten Ende ist der Nachstellhebel 20 mit einem Vorsprung 22 versehen. Der Vorsprung 22 stellt ein erstes Formschlusselement dar, welches durch Formschluss in ein zweites Formschlusselement, nämlich die Verzahnung 31 eines Zahnrades 30 der Nachstelleinrichtung, eingreifen kann.

Das Zahnrad 30 ist außerdem Bestandteil eines Nachstellmechanismus, der in einer zu der Abstützung 17 hin weisenden Bohrung 12A des Spreizschlossgehäuses 12 angeordnet ist. Die einzelnen Bauteile des Nachstellmechanismus sitzen alle koaxial zueinander auf einer gehäusefest angeordneten Drehachse 49, und sind damit kompakt bauend angeordnet.

Das Nachstellelement 34 des Nachstellmechanismus und damit jenes Bauteil, welches beim Nachstellen sukzessive verlagert wird, ist eine zentrale Schraube 34. Diese weist ein langes Außengewinde auf, und sie ist an ihrem äußeren Ende zu einem Kopf erweitert und bildet dort die Abstützung 17 gegen die eine Bremsbacke 2B. Zur Aufnahme der Bremsbacke ist der Kopf der Schraube 34 nach Art einer Gabel oder schlitzförmig gestaltet, so dass darin das flach gestaltete Ende der Bremsbacke 2B Aufnahme findet, ohne dass sich die Schraube 34 drehen kann.

Das Nachstellelement, also die zentrale Schraube 34, steht in einer Gewindeverbindung 36 mit einer die Schraube umgebenden Gewindebuchse 35. Auf dieser befinden sich in koaxialer Anordnung, von gehäuseaußen nach gehäuseinnen betrachtet, eine Feder 33, hier in Gestalt eines Tellerfederpakets, das bereits erwähnte Zahnrad 30, ein in einer Ringnut der Gewindehülse 35 sitzender Ring 39 sowie eine im Wesentlichen spielfrei in der Bohrung 12A sitzende weitere Buchse 37. Die weitere Buchse 37 ist mit der Gewindebuchse 35 drehfest, aber in Axialrichtung beweglich verbunden, was bei der hier beschriebenen Ausführungsform durch eine Keilverzahnung 38 zwischen Buchse 37 und Gewindebuchse 35 erreicht wird. Die Buchse 37 stützt sich gegen eine Axialfläche 41 des Gehäuses 12 ab.

Die Gewindebuchse 35 ist an ihrem dem Gehäuse 12 abgewandten Ende mit einem Federanschlag 42 versehen. Die ringförmig gestaltete Feder 33 stützt sich zwecks Druckausübung einerseits an diesem Anschlag 42, und andererseits von außen her gegen das Zahnrad 30 ab.

In Axialrichtung stützen sich das Zahnrad 30 und die Buchse 37 über eine Überlastkupplung 45 gegeneinander ab. Die Überlastungskupplung 45 setzt sich aus Rampen zusammen, die in Umfangsrichtung über die gegenseitigen Anlageflächen von Zahnrad 30 und Buchse 37 verteilt sind und jeweils aus einer ansteigenden Rampenfläche bestehen. Aufgrund dieser Ausgestaltung entkuppelt das Zahnrad 30 von der Buchse 37 bei ausreichend hohem Widerstandsmoment der Buchse 37.

Das Zahnrad 30 sitzt mit einer Art zylindrischen Durchgangsbohrung auf einem zylindrischen Abschnitt der Gewindebuchse 35 auf, so dass das Zahnrad 30 gegenüber der Gewindehülse 35 drehbar gelagert ist. Zusätzliche Maßnahmen können getroffen werden, um bei einem solchen Verdrehen die Reibung zwischen dem Zahnrad 30 und der sich daran abstützenden Feder 33 gering zu halten.

Gemäß den Figuren 5a und 5b sitzt der Ring 39 mit seinem Innenumfang axial eng eingepasst in der Gewindehülse 35, wohingegen sein Außenumfang sich in einer nach innen offenen Ringnut 46 befindet, die teils durch einen Absatz 47 am Innenrand des Zahnrades 30, und teils durch einen Absatz 48 am Innenrand der Buchse 37 gebildet wird. Die so zusammengesetzte Ringnut 46 ist axial breiter, als der Ring 39 selbst. Auf diese Weise kann es je nach Größe der über die Abstützung 17 auf die Schraube 34 wirkende Kraft sowohl zu der Situation nach Fig. 5a kommen, bei der sich das Zahnrad 30 mit dem Absatz 47 gegen den Ring 39 abstützt, als auch zu der Situation nach Fig. 5b, bei der es an einer solchen axialen Abstützung fehlt, vielmehr der Ring 39 gegen den Absatz 48 der im Gehäuse 12 gelagerten Buchse 37 anliegt.

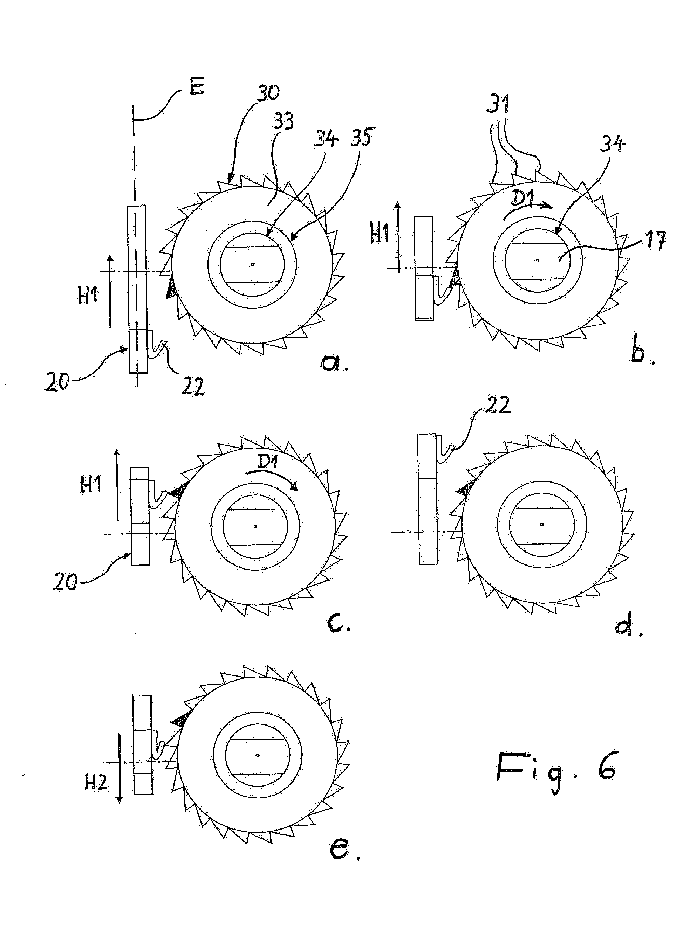

Die Figuren 6a - 6e zeigen in verschiedenen Stadien das Zusammenwirken des Nachstellhebels 20 einschließlich des Vorsprungs 22 mit der Verzahnung 31 des Zahnrades 30. Hierbei bildet der Nachstellhebel 20 ein erstes Antriebsteil, das Zahnrad 30 ein zweites Antriebsteil, der Vorsprung 22 bildet ein erstes Formschlusselement, und die Zähne der Verzahnung 31 bilden zweite Formschlusselemente.

Der nach Art einer Wippe ausgebildete Nachstellhebel 20 führt an seinem Ende, an dem der Vorsprung 22 angeordnet ist, um die Achse 21 eine leicht bogenförmige Bewegung aus. Die Hebelbewegung erfolgt in einer zum Umfang des Zahnrades 30 tangentialen Ebene E ohne seitlichen Versatz, d.h. auch bei der Bremszustellung erfolgt die Bewegung des Nachstellhebels 20 nur in dieser Ebene E. Gleichwohl ergibt sich an dem Ende des Nachstellhebels 20, radial zu der Drehachse 49 des Zahnrades 30, ein gezielt rückfederndes Verhalten. Dieses wird bei dem hier beschriebenen Ausführungsbeispiel erreicht, indem der Vorsprung 22 elastisch biegsam ist, etwa nach Art einer Blattfeder. So zeigt Fig. 6b den Vorsprung 22 in entspanntem Zustand, wobei er bis in den Bewegungsbereich der Verzahnung 31 hineingreift, hingegen Fig. 6e den Vorsprung 22 in federelastisch verformtem Zustand, wobei seine Spitze nach außerhalb des Bewegungsbereichs der Verzahnung 31 zurückfedert.

Ferner bezeichnet sind in den Fign. 6a - 6e, aber auch in Fig. 2, die Vorwärtsbewegung H1 bzw. Rückbewegung H2 des Endes des ersten Antriebsteils, also des Nachstellhebels 20, sowie die Vorwärtsdrehung D1 bzw. Rückdrehung D2 des zweiten Antriebsteils, also des Zahnrades 30.

Die Fig. 6a in Verbindung mit Fig. 6b gibt den Zustellweg wieder, bei dem das Lüftspiel L einem vorgegebenen Abstandsmaß entspricht, und daher nicht nachgestellt wird.

Mit dem Spreizen des Spreizschlosses 5 einher geht das Verschwenken, d. h. die Vorwärtsbewegung H1 des Nachstellhebels 20. Dessen Vorsprung 22 greift in den in Fig. 6b schwarz hervorgehobenen Zahn formschlüssig ein, und das Zahnrad 30 dreht in Vorwärtsdrehung D1.

Solange das Lüftspiel L dem vorgegebenen Abstandsmaß entspricht, ergibt sich folgender Ablauf:

Zum Zeitpunkt, zu dem der Nachstellhebel 20 bzw. der Vorsprung 22 mit dem Zahnrad 30 in Eingriff gelangt, liegen die Bremsbacken 2A, 2B bereits an der Bremstrommel 3 an. Es kommt an der Gewindeverbindung 36 zu einer Axiallast. Die Gewindereibung steigt an mit der Folge, dass fortan die Gewindeverbindung 36 hemmt. Dadurch wiederum ist die Drehbeweglichkeit der Gewindebuchse 35 und, wegen der Keilverzahnung 38, die Drehbeweglichkeit der Buchse 37 gehemmt. Jede weitere Drehung des Zahnrades 30 führt zu einem Auflaufen der Rampen unter dem Gegendruck der Feder 33, die Überlastkupplung 45 unterbricht also den Übertragungsweg zum Nachstellelement 34. Bei einer sehr starken Bremsung kann es vorkommen, dass die Rampen überspringen. Ebenso kann es vorkommen, dass der Vorsprung 22, wie in Figur 6d gezeigt, den Eingriff mit dem Zahnrad 30 verlässt.

Beim Nachlassen der Bremskraft rutschen die Rampen der Überlastkupplung 45 durch die Federkraft der Feder 33 wieder in die Schließstellung zurück. Das Zahnrad 30 erfährt also eine kleine Rückdrehung D2, wobei sich durch die Resthemmung in der Gewindeverbindung 36 das zentrale Nachstellelement 34 nicht mit dreht. Auch der Nachstellhebel 20 schwenkt zurück, wobei der Vorsprung 22, wie in Figur 6e gezeigt, eventuell die Zähne 31 überspringt. Die durch die Feder 33 hervorgerufene Reibkraft des Zahnrades 30 gegenüber den sich axial gegen das Zahnrad 30 abstützenden Teilen ist dabei größer, als die Federkraft des federnd gestalteten Vorsprungs 22.

Ist das Lüftspiel L größer als das vorgegebene Abstandsmaß, ergibt sich folgender Ablauf:

Der Vorsprung 22 gelangt wieder in Eingriff mit dem Zahnrad 30. Solange das vorhandene, jetzt zu große Lüftspiel L noch nicht überwunden ist, lastet nur eine geringe Axiallast auf der Gewindeverbindung 36, so dass diese keine nennenswerte Hemmung zeigt. Die Drehung D1 des Zahnrades 30 wird daher, ohne eine Relativdrehung an der Überlastkupplung 45, auf die Buchse 37 und von dort über die drehfeste Keilverbindung 38 auf die Gewindebuchse 35 übertragen. Diese dreht daher ebenfalls und bewegt über die Gewindeverbindung 36 die zentrale Schraube 34 etwas nach außen, also zu der Backe 2B hin.

Sobald das Lüftspiel L überwunden ist, kommt es an der Gewindeverbindung 36 zu einer Axiallast, die Gewindereibung steigt an mit der Folge, dass fortan die Gewindeverbindung 36 hemmt. Dadurch wiederum ist die Drehbeweglichkeit der Gewindebuchse 35 und, wegen der Keilverzahnung 38, die Drehbeweglichkeit der Buchse 37 gehemmt. Jede weitere Drehung des Zahnrades 30 führt zu einem Auflaufen der Rampen unter dem Gegendruck der Feder 33, die Überlastkupplung 45 unterbricht also den Übertragungsweg zum Nachstellelement 34. Bei einer sehr starken Bremsung kann es vorkommen, dass die Rampen der Überlastkupplung überspringen. Ebenso kann es vorkommen, dass der Vorsprung 22, wie in Figur 6d gezeigt, den Eingriff in das Zahnrad 30 verlässt.

Beim Nachlassen der Bremskraft rutschen die Rampen der Überlastkupplung 45 durch die Federkraft der Feder 33 wieder in die Schließstellung zurück. Dies bedeutet, dass das Zahnrad 30 eine kleine Rückdrehung D2 erfährt, wobei sich durch die Resthemmung in der Gewindeverbindung 36 das Nachstellelement 34 nicht wieder zurückdreht. Auch der Nachstellhebel 20 wird zurückgedreht, wobei sein Vorsprung 22, wie in Figur 6e gezeigt, eventuell die Zähne 31 überspringt.

Endergebnis ist eine irreversible Drehwinkeländerung des Zahnrades 30 und damit auch der Gewindebuchse 35 mit der Folge, dass das Nachstellelement 34 etwas weiter in Richtung Bremsbacke herausgeschraubt bleibt, es also nachgestellt wird.

Im Fall der Aktivierung der Rückfahrautomatik 10 ergibt sich folgender Ablauf:

Die Fig. 6d gibt die Situation bei einem nur vermeintlich zu großen Lüftspiel wieder, wobei dieses Spiel aber tatsächlich auf dem Eingreifen der Rückfahrautomatik beruht, und dem daher zu großen Abstand der Bremsbacken zu ihrem Reibpartner, der Bremstrommel.

Das Verfahren des Nachstellens läuft in diesem Fall wie zuvor für den Fall des über den Toleranzbereich hinausgehenden Lüftspiels beschrieben ab, jedoch kommt es zu der durch den Wechsel von Fig. 6c zu 6d illustrierten Situation, bei der sich an einen ersten Bewegungsabschnitt des Nachstellhebels 20 mit formschlüssigem Eingriff in das Zahnrad 30 ein zweiter Bewegungsabschnitt anschließt, in dem dieser Formschluss komplett verloren geht.

Da sich der Nachstellhebel 20 nur in der tangential zum Zahnrad 30 liegenden Ebene E zu bewegen vermag, entfernt sich der Vorsprung 22 auf dem zweiten Bewegungsabschnitt von der Verzahnung 31, so dass der Formschluss mit der Verzahnung 31 komplett verloren geht. Ab diesem Zeitpunkt führt jede weitere Vorwärtsbewegung H1 des Antriebsteils 20 nicht mehr zu einer Vorwärtsdrehung D1 des zweiten Antriebsteils 30. Es erfolgt also keine Nachstellung bzw. werden alle für die Nachstellung maßgeblichen Bauteilbewegungen eingefroren. Entscheidend hierfür ist der Verlauf des Bewegungsweges des Nachstellhebels 20 in Bezug auf die Anordnung der Verzahnung 31. Da sich der Nachstellhebel 20 in der Ebene E tangential zu dem Zahnrad 30 und dessen Verzahnung 31 bewegt, ist der Eingriff spätestens zu dem in Fig. 6c wiedergegebenen Zeitpunkt aufgehoben, also mit Ende des ersten Bewegungsabschnitts des Nachstellhebels 20. Da das Kollabieren der Rückfahrautomatik 10 bzw. der Abstützung 9 nicht zu Beginn, sondern erst mit einer hohen Bremskraft bzw. bei einem bereits weit gedrehten Spreizhebel 14 eintritt, hat der Vorsprung 22 zu diesem Zeitpunkt bereits den erstem Bewegungsabschnitt, in dem er sich in Eingriff mit der Verzahnung 31 befindet, verlassen, und er befindet sich bereits auf dem zweiten Bewegungsabschnitt, wie er durch den Zustand Fig. 6c bis Fig. 6d illustriert ist.

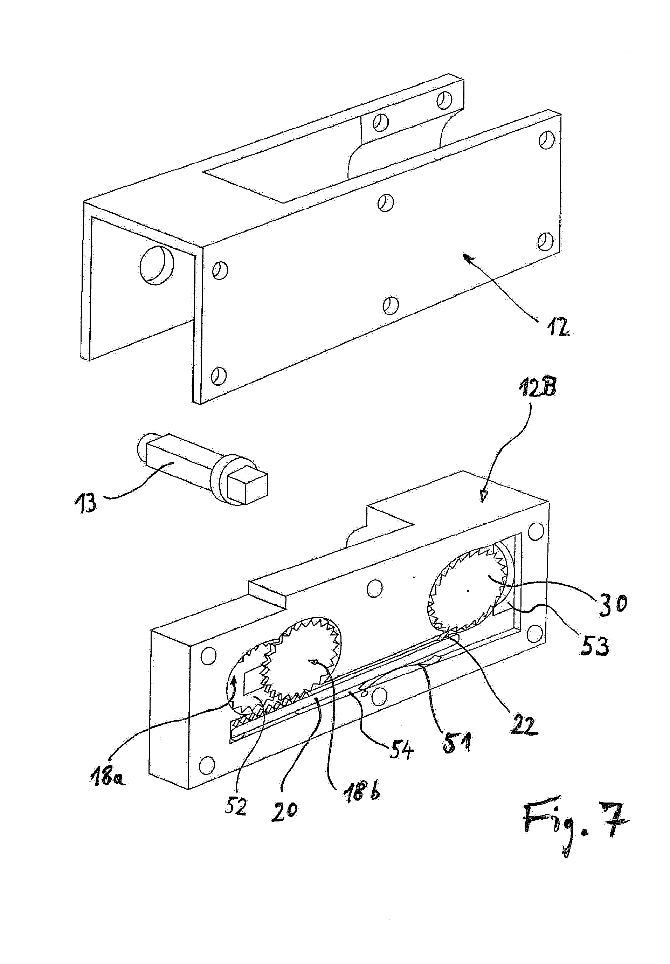

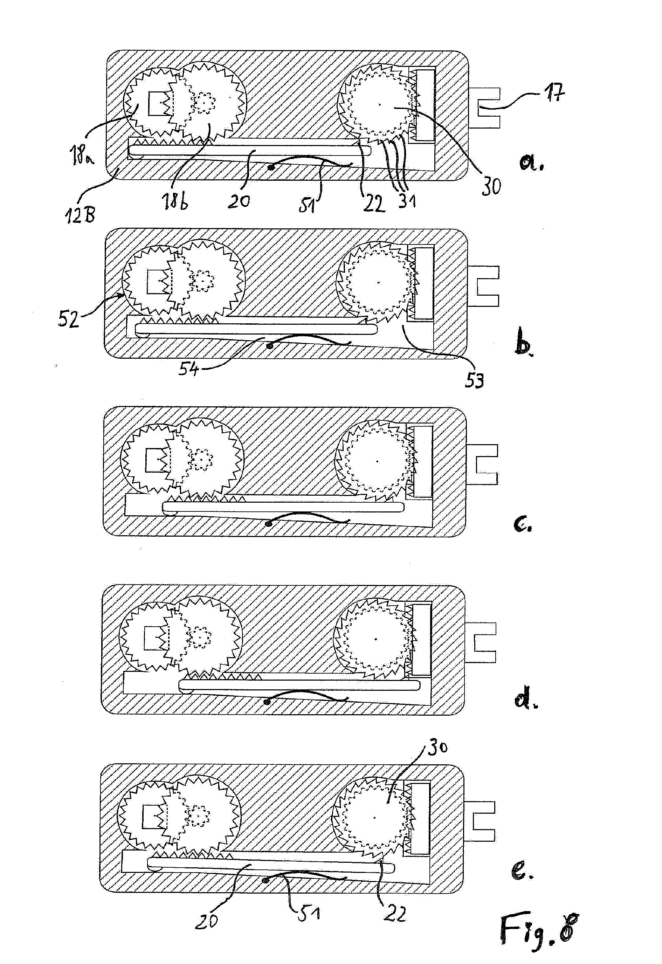

Die Fig. 7 in Verbindung mit den entsprechenden Funktionsdarstellungen Fign. 8a - e zeigt eine zweite Ausführungsform, bei der funktionsmäßig übereinstimmende Bauteile mit denselben Bezugszeichen versehen sind wie bei der Ausführungsform nach den Fign. 1 - 6e.

Bei der zweiten Ausführungsform ist die erste Antriebseinheit nicht aus schwenkbeweglichen Elementen zusammengesetzt, also aus einem Übersetzungshebel und einem Nachstellhebel, sondern dieser Antrieb wird unter Verwendung unter anderem einer im Wesentlichen translatorisch bewegte Zahnstange 20 realisiert.

In dem Gehäuse 12 oder in einem Gehäuseeinsatz 12B des Spreizschlosses gelagert ist wiederum die Welle 13, auf welcher der hier nicht wiedergegebene Spreizhebel 14 schwenkbar gelagert ist. Die Welle 13 nimmt über einen Mehrkant ein Ritzel 18a mit, welches nach Art eines Über- oder Untersetzungsgetriebes ein zweites Ritzel bzw. Ritzelpaar mit einer inneren und äußeren Verzahnung 18b antreibt. Beide Ritzel 18a, 18b sind in dem Gehäuse 12 gelagert bzw. in einem Aufnahmeraum 52 in einem Einsatz 12B, der in dem Gehäuse 12 angeordnet ist.

Das Ritzel 18b treibt über seine äußere Verzahnung eine in dem Einsatz 12B im Wesentlichen längs beweglich angeordnete Zahnstange 20 an, die bei dieser Ausführungsform den Nachsteller bildet. Am anderen Ende ist die Zahnstange mit dem Vorsprung 22 versehen, also mit jenem Bauteil, welches in Formschluss mit dem zweiten Antriebsteil, der Verzahnung des Zahnrades 30 treten kann. Das Zahnrad 30 ist hier in einem Aufnahmeraum 53 des Einsatzes 12B angeordnet und drehbar gelagert. Das Zahnrad 30 ist bei dieser Ausführungsform zweiteilig als Ritzelpaar ausgebildet, wobei die innere Verzahnung in ein weiteres Zahnrad kämmt bzw. dieses antreibt. Das weitere Zahnrad bzw. Ritzel ist in die nachfolgenden Teile 33, 34, 35, 37, 39 der Nachstelleinrichtung, welche in den Fign. 7 und 8 zwar nicht dargestellt sind aber ebenfalls im Gehäuseeinsatz 12B geschützt aufgenommen sind, so eingebunden, wie dies oben zu der ersten Ausführungsform beschrieben ist.

Eine federelastische Blattfeder 51 beaufschlagt die Zahnstange 20 in Richtung zu dem Zahnrad 30 hin und beeinflusst so den Formschluss zwischen Nachsteller und Zahnrad 30. Die Blattfeder 51 befindet sich hierzu gemeinsam mit der Zahnstange 20 in einem langgestreckten Aufnahmeraum 54, mit dem der Einsatz 12B versehen ist, und der genügend Platz für die Längs- wie für die Querbewegung des Nachstellers 20 bietet.

In den Fign. 8a - e sind, analog zu den entsprechenden Funktionszuständen der Fign. 6a - e, die verschiedenen Eingriffssituationen zwischen dem Nachsteller 20 einschließlich des daran ausgebildeten Vorsprungs 22 und der Verzahnung 31 des Zahnrades 30 dargestellt. Abweichend zu der ersten Ausführungsform ist der Vorsprung 22 selbst hier nicht elastisch bzw. flexibel ausgeführt, sondern er ist starr an der Zahnstange 20 ausgebildet. Das radial federnde Ausweichen wird in der Funktionsstellung gemäß Fig. 8e erzielt, indem die Zahnstange 20 selbst entgegen dem Druck der Blattfeder 51 seitlich ausweichen kann.

Von Vorteil bei dieser zweiten Ausführungsform ist die kompakte Bauweise, bei der die wichtigsten beweglichen Teile der Nachstelleinrichtung innerhalb des Spreizschlossgehäuses 12 geschützt gegen Verschmutzung untergebracht sind. Das Gehäuse 12 deckt nach außen jene Bewegungsräume ab, in denen sich die Teile der Nachstelleinrichtung bewegen und teils ineinander greifen. Insbesondere die drei Aufnahmeräume 52, 53, 54 werden so nach außen durch das Gehäuse 12 abgedeckt.

Aber auch bei der ersten Ausführungsform ist es denkbar, die Bauteile der Nachstellung durch ein zusätzliches Gehäuse gegen Schmutz zu schützen. Insbesondere ist es möglich, dieses Gehäuse aus flexiblem Material z. B. Gummi auf das Spreizschlossgehäuse 12 aufzuziehen, welches die Kontur für das Spreizschlossgehäuse 12 und die daran außenliegenden Bauteile der Nachstellung sowie deren Bewegungsräume aufweist.

Von Vorteil bei dieser zweiten, aber auch bei der ersten Ausführungsform ist ferner, dass kein weiteres Teil notwendig ist, welches zum Aufheben der Nachstellung im Fall der aktivierten Rückfahrautomatik mit Bauteilen der Bremse z. B. einer Bremsbacke verbunden ist.

Denkbar ist auch, dass beim ersten Ausführungsbeispiel die Bauteile der Nachstellung durch ein zusätzliches Gehäuse schmutzgeschützt werden. Insbesondere ist es möglich, dieses Gehäuse aus flexiblem Material, z. B Gummi, auf das Spreizschlossgehäuse 12 aufzuziehen, welches die Kontur für das Spreizschlossgehäuse 12 und die daran außenliegenden Bauteile der Nachstellung sowie deren Bewegungsräume aufweist.

### Bezugszeichenliste

- 1: Bremsorgan
- 2A: Bremsbacke
- 2B: Bremsbacke
- 3: Bremstrommel
- 5: Spreizschloss
- 6: Zugfeder
- 8: Bremsschild
- 9: Abstützung
- 10: Rückfahrautomatik
- 12: Spreizschlossgehäuse
- 12A: Bohrung
- 12B: Einsatz
- 13: Welle
- 14: Spreizhebel
- 15: Haken
- 16: Abstützung
- 17: Abstützung
- 18: Übersetzungshebel
- 18a: Ritzel
- 18b: Ritzel
- 19: Koppelelement
- 20: erstes Antriebsteil, Nachsteller, Nachstellhebel
- 21: Achse
- 22: Vorsprung
- 30: zweites Antriebsteil, Zahnrad
- 31: Verzahnung
- 33: Feder, Tellerfeder
- 34: Nachstellelement, Schraube
- 35: Gewindebuchse
- 36: Gewindeverbindung
- 37: Buchse
- 38: Keilverzahnung
- 39: Ring
- 41: Axialfläche
- 42: Federanschlag
- 45: Überlastkupplung
- 46: Ringnut
- 47: Absatz
- 48: Absatz
- 49: Drehachse
- 51: Blattfeder
- 52: Bewegungsraum
- 53: Bewegungsraum
- 54: Bewegungsraum

- A: Abstand
- E: Ebene
- D1: Vorwärtsdrehung
- D2: Rückdrehung
- F: Bremskraft
- H1: Vorwärtsbewegung
- H2: Rückbewegung
- L: Lüftspiel

## Patentansprüche

1. Radbremse mit einer Bremstrommel (3), zwei Bremsbacken (2A, 2B), einem durch ein Bremsorgan (1) betätigten, die Bremsbacken (2A, 2B) gegen die Bremstrommel (3) beaufschlagenden Spreizschloss (5), einer Rückfahrautomatik (10) zum zumindest teilweisen Aufheben der Bremsbackenabstützung bei Rückwärtsfahrt des Fahrzeuges, und einer an dem Spreizschloss (5) angeordneten Nachstelleinrichtung für das Lüftspiel (L) zwischen den Bremsbacken (2A, 2B) und der Bremstrommel (3), wobei im Übertragungsweg der Nachstelleinrichtung mindestens angeordnet sind:
- ein mit der Bewegung des Bremsorgans (1) gekoppeltes erstes Antriebsteil (20) mit mindestens einem daran angeordneten ersten Formschlusselement (22),
- ein drehbar am Spreizschloss (5) gelagertes zweites Antriebsteil (30), das zur Kopplung mit dem ersten Antriebsteil (20) mit gleichmäßig über den Umfang verteilten zweiten Formschlusselementen (31) versehen ist,
- ein durch Drehen des zweiten Antriebsteils (30) in Richtung zu einer der Bremsbacken (2A bzw. 2B) schraubbares und an dieser unmittelbar oder mittelbar abgestütztes Nachstellelement (34),
**dadurch gekennzeichnet, dass** das erste Antriebsteil (20) über einen ersten Bewegungsabschnitt sowie einen zweiten, versatzlos in Verlängerung hierzu angeordneten Bewegungsabschnitt beweglich ist, dass die Formschlusselemente (22, 31) auf dem ersten Bewegungsabschnitt in Eingriff, und auf dem verlängerten Bewegungsabschnitt außer Eingriff sind, und dass zwischen dem zweiten Antriebsteil (30) und dem Nachstellelement (34) eine Überlastkupplung (45) angeordnet ist, welche den Übertragungsweg zum Nachstellelement (34) in gekuppeltem Zustand schließt und in entkuppeltem Zustand unterbricht.

2. Radbremse nach Anspruch 1, **dadurch gekennzeichnet, dass** das Formschlusselement (22) an dem ersten Antriebsteil (20) ein zu dem zweiten Antriebsteil (30) hin federnd vorstehender Vorsprung ist.

3. Radbremse nach Anspruch 1 oder 2, **dadurch gekennzeichnet, dass** das erste Antriebsteil (20) ein auf einer Achse (21) schwenkbar an oder in einem Gehäuse (12) des Spreizschlosses (5) gelagerter Nachstellhebel ist.

4. Radbremse nach Anspruch 3, **dadurch gekennzeichnet, dass** in dem Gehäuse (12) auf einer Welle (13) ein mit dem Bremsorgan (1) verbundener Spreizhebel (14) gelagert ist, der mit einer Abstützung (16) für eine der beiden Bremsbacken versehen ist, und dass auf derselben Welle (13) drehfest zu dem Spreizhebel (14) ein Übersetzungshebel (18) angeordnet ist, dessen Ende mit dem Nachstellhebel (20) gekoppelt ist.

5. Radbremse nach Anspruch 4, **dadurch gekennzeichnet, dass** sich die Kopplung des Nachstellhebels (20) mit dem Übersetzungshebel (18) zwischen der Welle (13) und der Achse (21) befindet.

6. Radbremse nach Anspruch 1 oder 2, **dadurch gekennzeichnet, dass** das erste Antriebsteil (20) eine in einem Gehäuse (12) oder Gehäuseeinsatz (12B) des Spreizschlosses (5) längsbeweglich angeordnete Zahnstange ist.

7. Radbremse nach Anspruch 6, **dadurch gekennzeichnet, dass** in dem Gehäuse (12) oder Gehäuseeinsatz (12B) auf einer Welle (13) ein mit dem Bremsorgan (1) verbundener Spreizhebel (14) gelagert ist, der mit einer Abstützung (16) für eine der beiden Bremsbacken versehen ist, und dass auf derselben Welle (13) drehfest zu dem Spreizhebel (14) ein Ritzel (18a) angeordnet ist, welches direkt oder indirekt mit der Zahnstange gekoppelt ist.

8. Radbremse nach einem der vorangehenden Ansprüche, **dadurch gekennzeichnet, dass** das zweite Antriebsteil (30) ein Zahnrad mit Umfangsverzahnung ist.

9. Verfahren zum Nachstellen des Lüftspiels bei einer Radbremse eines trommelgebremsten Fahrzeuges, mit einem eine Zuspannbewegung ausführenden und dabei zwei Bremsbacken auseinanderdrückenden Spreizschloss, einer ein vorgegebenes Lüftspiel zwischen den Bremsbacken und der Bremstrommel automatisch einstellenden Nachstelleinrichtung, und einer Rückfahrautomatik, durch welche die Bremsbackenabstützung bei Rückwärtsfahrt zumindest teilweise aufgehoben wird, **dadurch gekennzeichnet, dass** eine die durch das Spreizschloss (5) hervorgerufene Zuspannbewegung abgreifende erste Antriebseinheit (18, 18a, 18b, 20, 22) nach Überwinden des vorgegebenen Lüftspiels in eine zweite Antriebseinheit (30, 37, 35, 34) eingreift, wobei die zweite Antriebseinheit (30, 37, 35, 34) zwei miteinander über einen definierten Reibschluss bewegungsgekoppelte Kupplungsteile (30, 37) beinhaltet, welche die Bewegung solange an einen Nachstellmechanismus weitergeben, bis eine auf das Spreizschloss (5) wirkende, vorgegebene Abstützkraft der Bremsbacken (2A, 2B) überschritten wird.

10. Verfahren nach Anspruch 9, **dadurch gekennzeichnet, dass** Bestandteile der ersten Antriebseinheit (18, 18a, 18b, 20, 22) eine Übersetzung (18, 18a, 18b) und ein Nachsteller (20) mit einem Formschlusselement (22) zum Eingriff in die zweite Antriebseinheit sind.

11. Verfahren nach Anspruch 9 oder 10, **dadurch gekennzeichnet, dass** Bestandteile der zweiten Antriebseinheit ein Zahnrad (30), eine Buchse (37), eine Gewindebuchse (35) und ein Nachstellelement (34) sind.

12. Verfahren nach Anspruch 9, 10 oder 11, **dadurch gekennzeichnet, dass** der Eingriff der ersten in die zweite Antriebseinheit spätestens dann beendet ist, wenn die Rückfahrautomatik (10) das Rad drehfrei gibt.

13. Spreizschloss für eine Trommelbremse mit einer Rückfahrautomatik, mit einem Spreizschlossgehäuse (12), einem auf einer Welle (13) in Bezug auf das Spreizschlossgehäuse (12) drehbar gelagerten Spreizhebel (14), und mit einem Nachstellelement (34), welches mit Antriebsteilen (20, 30) in Wirkverbindung steht, **dadurch gekennzeichnet, dass** die Antriebsteile in an dem Spreizschlossgehäuse (12) ausgebildeten Bewegungsräumen, welche gegenüber der Umgebung verschlossen sind, aufgenommen sind.

14. Spreizschloss nach Anspruch 13, **dadurch gekennzeichnet, dass** in dem Spreizschlossgehäuse (12) ein Einsatz (12B) angeordnet ist, in dem die Bewegungsräume der Antriebsteile (20, 30) ausgebildet sind.

15. Spreizschloss nach Anspruch 14, **dadurch gekennzeichnet, dass** das Spreizschlossgehäuse (12) die Bewegungsräume abdeckt bzw. verschließt.
